# NEUE EUROPÄISCHE PATENTSCHRIFT

(11) **EP 0 651 940 B2**
(45) Veröffentlichungstag und Bekanntmachung des Hinweises auf die Entscheidung über den Einspruch: **15.12.2004**
(45) Hinweis auf die Patenterteilung: 30.09.1998
(21) Anmeldenummer: 94116787.6
(22) Anmeldetag: 25.10.1994
(51) Int. Cl.: A01F 15/10, A01D 89/00

(54) **Federzinken, Fördervorrichtung und Erntemaschine**
Spring tine, conveyor device and harvesting machine
Dent à ressort, dispositif convoyeur et moissonneuse

(30) Priorität: 09.11.1993 US 150636
(43) Veröffentlichungstag der Anmeldung: 10.05.1995
(73) Patentinhaber: DEERE & COMPANY, Moline, Illinois 61265-8098 (US)
(72) Erfinder: Frimml, Roger William, Ottumwa, Iowa 52501 (US); Anstey, Henry Dennis, Ottumwa, Iowa 52501 (US); Viaud, Jean, F-57200 Sarreguemines (FR)
(74) Vertreter: Magin, Ludwig Bernhard

(56) Entgegenhaltungen:
- DE-B- 1 247 732
- DE-B- 11 582 412
- DE-C- 3 340 685
- DE-U- 1 872 594
- DE-U- 8 000 724
- GB-A- 722 622
- US-A- 3 014 335
- US-A- 3 523 412
- Zeichnungen eines Federzinkens Nr. 02-83-03-05 vom 04.03.85, Nr. 02-70-03-08 vom 07.02.85, Nr. 02-96-03-05 vom 25.02.86 und Nr. 02-81-03-05 vom 12.03.87
- Rechnungen und Lieferscheine der Ferzinken, Blatt einer Ersatzteilliste einer Aufnehmertrommel, Zeichnung eines Trommelzinkens
- Prospekt "Turbo-Scheibenmäher", Teilzeichnung eines Federzinkens Nr. 130552, Berechnungstabelle für die Federkräfte eines Federzinkens

## Beschreibung

Die Erfindung betrifft eine Erntemaschine mit einer Fördervorrichtung, die Erntegut vom Boden aufnimmt und es zu Gutbearbeitungselementen weiterleitet und auf einem rotierenden Zinkenaufbau getragene oberschlächtig fördernde Federzinken aufweist.

Federzinken werden insbesondere in landwirtschaftlichen Erntemaschinen benutzt, die in Schwaden auf dem Boden liegendes Erntegut aufsammeln und einer Weiterbearbeitungseinrichtung weitergeben. In sehr großem Umfang werden derartige Federzinken in sog. Pick-Ups verwendet, die z. B. an Rundballenpressen, Ballenpressen, Feldhäckslern und Ladewagen angebaut sind.

Bei Pick-Ups, die ein Schwad aufnehmen, das breiter ist als deren abgabeseitige Öffnung, sammelt sich in den Seitenbereichen eine größere zu fördernde Erntegutmenge an als in einem Mittenbereich. Aber auch dann, wenn eine Rundballenpresse beim Einsatz in Schlangenlinien über ein Schwad gefahren wird, tritt jeweils eine übermäßige Gutzufuhr in den Seitenbereichen auf.

Pick-Ups werden in einer universellen Ausbildung für die Beförderung aller anfallenden Erntegüter eingesetzt, so daß sehr weiches Halmgut wie Gras einerseits und störrisches Erntegut, wie Süßrohrsorghum andererseits, befördert werden müssen.

In beiden vorgenannten Fällen kann es zu Verstopfungen oder sonstigen Förderproblemen kommen, weil eine sichere Gutförderung nicht gewährleistet ist.

So zeigt die US-A-3,523,412 eine Pick-Up mit Zinken, die an dem auf einer Trommel befestigten Ende wendelförmig ausgebildet sind und aus festem Federstahldraht bestehen. Aufgrund dieser Material- und Formgebung können die Zinken umbiegen, wenn sie auf Gegenstände, wie z. B. Steine auftreffen. Dieser Stand der Technik läßt offen, welche Festigkeit ein solcher Zinken aufweisen sollte.

Die der Erfindung zugrunde liegende Aufgabe wird darin gesehen, einen Federzinken bzw. eine Fördervorrichtung mit derartigen Federzinken und vorteilhafte Anwendungen vorzuschlagen, bei deren Verwendung die vorgenannten Förderprobleme vermieden, jedenfalls aber gemindert werden.

Diese Aufgabe wird erfindungsgemäß durch die Lehre des Patentanspruchs 1 bzw. 4 gelöst, wobei in den jeweils davon abhängigen Patentansprüchen vorteilhafte Weiterentwicklungen angegeben sind.

Auf diese Weise wird das Fördergut, das insbesondere in der Form von Stroh, Heu oder Gras verschiedener Sorten unterschiedlichstes Förderverhalten zeigen kann, sicher und ohne Stauprobleme befördert.

Vergleicht man die Wirkungsweise einer Presse, die mit einer Fördervorrichtung mit konventionellen Federzinken bekannter Steifigkeit ausgestattet ist, mit der einer gleichen zweiten Presse mit einer Fördervorrichtung mit erfindungsgemäßen Federzinken, gelangt man zu folgenden Ergebnissen.
1. In einem 13-stündigen Test beim Pressen von Weizenstroh fertigt eine Rundballenpresse mit erfindungsgemäßen Federzinken 266 Ballen, während eine herkömmliche Rundballenpresse nur in der Lage ist, 189 Ballen zu produzieren. So ergibt sich für die Rundballenpresse mit erfindungsgemäßen Federzinken eine 40-prozentige Produktivitätssteigerung gegenüber der herkömmlichen Rundballenpresse. Bei Langzeitversuchen unter verschiedenen Bedingungen und bei unterschiedlichen Erntearten an mehreren Tagen ergibt sich, daß die Presse mit den erfindungsgemäßen Federzinken eine 15 - 20-prozentige Produktivitätserhöhung gegenüber der anderen Presse erreicht, wobei sie insgesamt 4000 Ballen herstellt.
2. Beim Pressen von Süßrohrsorghum ist eine Presse mit erfindungsgemäßen Federzinken in einer Fördervorrichtung in der Lage, jedenfalls bei 12 Versuchsballen, den Ballenbildungsvorgang erfolgreich zu beginnen. Hingegen ist eine Presse mit konventionellen Federzinken kaum oder gar nicht in der Lage, einen einzigen Ballen zu beginnen. Beim Pressen von Sorghum hat die Presse mit konventionellen Federzinken selbst bei einer speziellen Arbeitsweise große Schwierigkeiten, einen Ballen zu beginnen, während die mit steiferen Federzinken ausgestattete Presse keine Schwierigkeiten am Ballenanfang zeigt.
3. Beim Pressen von Gras- und Hülsenfrucht-Silage-Ballen zeigt die Presse mit einer erfindungsgemäßen Fördervorrichtung, die mit erfindungsgemäßen Federzinken ausgestattet ist, geringere Schwierigkeiten, einen Ballen zu beginnen als die Presse, die mit einer Fördervorrichtung mit gewöhnlichen Federzinken ausgestattet ist. Weiter tritt bei der Presse, deren Fördervorrichtung mit steiferen Federzinken ausgerüstet ist, keine Tendenz des Ernteguts auf, sich um die Starterrolle zu wickeln (nur einmal bei 600 Ballen ist ein derartiges Wickelproblem zu erwarten), was für eine sehr gute Leistung gehalten wird, wenn die Presse nicht mit einem Abstreifer für die Starterrolle zur Verhinderung von Umwicklungen ausgestattet ist. Bei einer Presse hingegen, die mit gewöhnlichen Federzinken ausgestattet ist, wird dieser Abstreifer als unbedingt nötige Ausrüstung zur Verhinderung von Umwicklungen angesehen.

Daraus ergibt sich, daß die steiferen Federzinken den konventionellen Federzinken beim Beginnen eines Ballens bei schwierigem Erntegut sowie in der Produktivität, d. h. im Durchsatz überlegen sind. Weiter zeigt sich, daß steifere Federzinken schwieriges Silagegut mit einer geringeren Tendenz zum Wickeln des Gutes um die Starterrolle zuführen.

Unter ganz außerordentlichen Erntebergungsbedingungen z. B. bei sehr störrigem Erntegut ist es vorteilhaft, Federzinken zu verwenden, die unter durchschnittlichen Aufnahmebedingungen im wesentlichen unnachgiebig sind, d. h. im wesentlichen zum Erreichen eines Biegewegs von 41 Grad an der Spitze eines Zinkens eine Kraft von wenigstens 336 N (76 lbf) benötigen.

Wenn die erfindungsgemäßen Federzinken auch in einer Vielzahl von Anwendungsgebieten brauchbar sind, z. B. auch bei industriellen Förderanlagen, so ist die Verwendung in einer Fördervorrichtung für eine Erntebergungsmaschine, insbesondere einer Ballenpresse, von besonderem Vorteil, weil dort die Förderbedingungen sehr unterschiedlich sind und ungewollte Bedingungen nicht stets vermieden werden können.

Wenn bei einer Erntebergungsmaschine mit einer Fördervorrichtung, die Erntegut vom Boden aufnimmt und es zu Gutbearbeitungselementen weiterleitet und auf einem rotierenden Zinkenaufbau getragene Federzinken aufweist, wenigstens einige der Federzinken unter durchschnittlichen Aufnahmebedingungen im wesentlichen unnachgiebig sind, wird das Erntegut, das z. B. auch einem Feldhäcksler oder einem Ladewagen zugeführt wird, ohne Verzug und kräftig mitgenommen, wobei die Ausbildung der Zinken als Feder-Zinken stets auch eine gewisse Nachgiebigkeit bei Überlastung gewährleistet, so daß die jeweilige Maschine gegen Fremdkörpereinwirkung gesichert ist.

Die Bauweise der Federzinken kann nach der Bauart der Fördervorrichtung gewählt werden, an die die Federzinken angebaut werden. So können neben Zinken in einer einzelnen Anbringung in einem festen Sockel auch zwei an einem gewendelten Innenteil anschließende Zinken oder zwei an einem geraden Zwischenteil anschließende Zinken verwendet werden.

Die Verwendung wenigstens einiger der erfindungsgemäßen Federzinken, d. h. solcher, bei denen zum Erreichen eines Biegewegs von 41 Grad an der Spitze ihrer Zinken eine Kraft von wenigstens 84 N (19 lbf) erforderlich ist, bzw. einer erfindungsgemäßen Fördervorrichtung in einer Rundballenpresse unterhalb einer Aufnahmeöffnung einer Preßkammer, d. h. bei der Bauart mit offenem Einlaß, ist besonders erfolgreich, da dort die Fördervorrichtung nicht nur gute Fördereigenschaften aufweisen muß, sondern auch zur Bildung des Ballens in dem Ballenpreßraum beiträgt.

In der Zeichnung ist ein in der Beschreibung nachfolgend näher beschriebenes Ausführungsbeispiel dargestellt. Es zeigt:
- Fig. 1: eine Erntemaschine in Seitenansicht,
- Fig. 2: eine erfindungsgemäße Fördervorrichtung der Erntemaschine in vergrößerter Darstellung und in Seitenansicht und
- Fig. 3: einen Zinkenaufbau mit erfindungsgemäßen Federzinken in perspektivischer Darstellung.

Zu Anfang ist zu bemerken, daß verschiedene Komponenten paarweise vorhanden sind, wobei nur ein Teil jedes Paares dargestellt wird. Die nicht gezeigte Komponente ist hierbei von gleicher oder ähnlicher Bauart, wie die gezeigte.

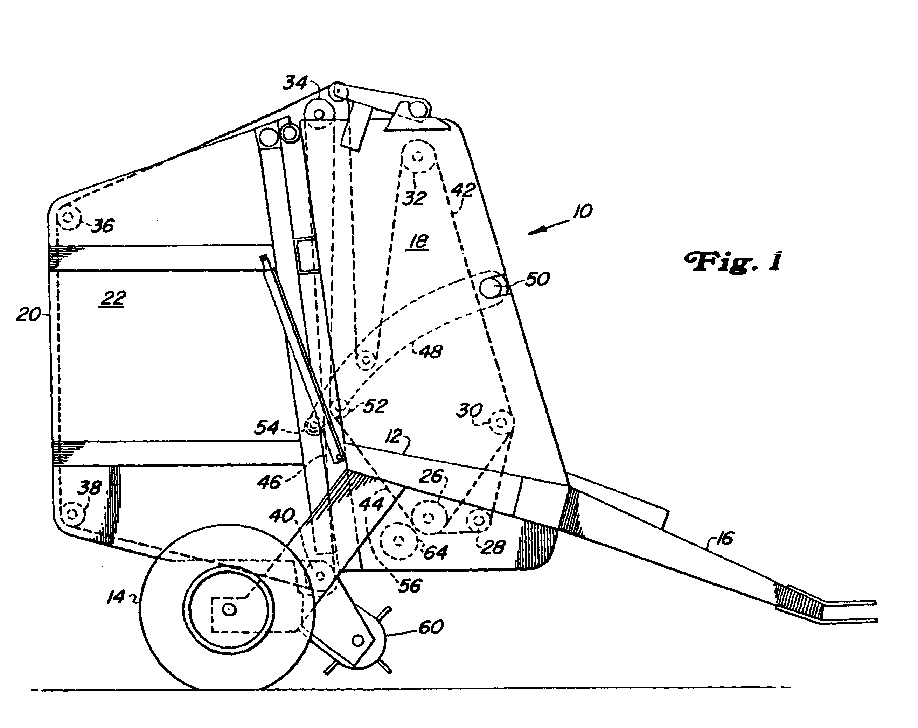

In Figur 1 wird eine Erntemaschine 10 zur Herstellung großer zylindrischer Ballen gezeigt, die üblicherweise als Rundballenpresse bezeichnet wird. Die Erntemaschine 10 beinhaltet einen Hauptrahmen 12, der von einem Paar Räder 14 getragen wird, und eine Deichsel 16, die daran befestigt ist und dazu dient, die Erntemaschine 10 mit einem Ackerschlepper zu verbinden. Ein Paar in Querrichtung, einen Abstand aufweisender, vertikaler Seitenwände 18 ist am Hauptrahmen 12 angebracht und hat jeweils aufrechte rückwärtige Enden. Ein Ballenaustrittstor 20 beinhaltet gegenüberliegende Seitenwände 22 und ist bei 24 an oberen rückwärtigen Stellen der Seitenwände 18 vertikal schwenkbar befestigt. Die vorderen Enden der Seitenwände 22 stoßen an die rückwärtigen Enden der Seitenwände 18, wenn das Ballenaustrittstor 20 wie dargestellt in eine geschlossene Stellung abgesenkt wird.

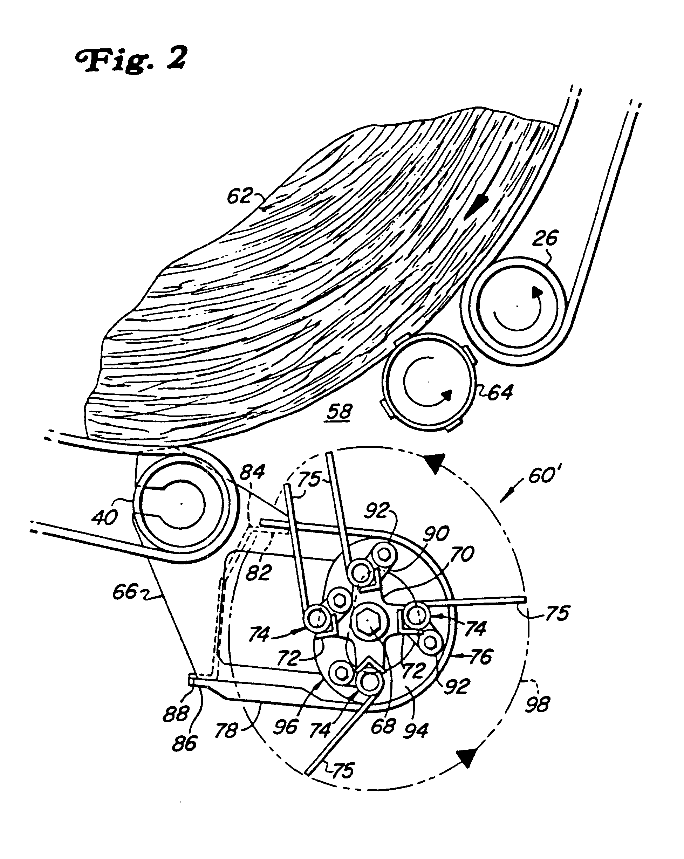

Die Paare der Seitenwände 18 und 22 tragen drenbar die gegenüberliegenden Enden einer Mehrzahl von ballenformenden Gurtunterstützungsrollen, die an die Randzone der Seitenwände 18 und 22 angrenzen. Im wesentlichen sind beginnend an einer unteren zentralen Stelle der Seitenwände 18 und gegen den Uhrzeigerdrehsinn verlaufend, eine angetriebene Rolle 26, eine untere vordere Rolle 28, eine mittlere vordere Rolle 30, eine obere vordere Rolle 32 und eine obere rückwärtige Rolle 34 montiert. Weiter sind von einem oberen rückwärtigen Punkt der Seitenwände 22 gegen den Uhrzeigerdrehsinn eine obere rückwärtige Rolle 36, eine niedrigere rückwärtige Rolle 38 und eine untere vordere Rolle 40 angebracht. Eine Mehrzahl endloser ballenformender Riemen 42 überspannt mit Abstand voneinander den Raum zwischen den gegenüberliegenden Paaren der Seitenwände 18 und 22. Außer einigen der Riemen 42, die über die untere vordere Rolle 28 laufen, sind die Riemen 42 so ausgerichtet, daß sie nacheinander über die Rollen 26, 28, 30, 32, 36, 38, 40 und 34 laufen. Ein vorderer Abschnitt 44 der Riemen 42 erstreckt sich aufwärts von der angetriebenen Rolle 26 zur Rolle 34. Ein rückwärtiger Abschnitt 46 der Riemen 42 erstreckt sich in gleicher Weise von der unteren vorderen Rolle 40 aufwärts zur Rolle 34. Zwischen den rückwärtigen Endpunkten eines Paares sich nach hinten erstreckender Spannarme 48, die vertikal schwenkbar an einer mittelhohen Stelle (bei 50) an der Vorderseite der Seitenwände 18 gelagert sind, sind mit geringem Abstand eine vordere und rückwärtige freilaufende Rolle 52 und 54 angebracht. Die vorderen und rückwärtigen Abschnitte 44 und 46 der Riemen 42 laufen jeweils oberhalb der angetriebenen Rolle 26 und der unteren Rolle 40 nach oben aufeinander zu und verlaufen zwischen den Rollen 52 und 54 in geringem Abstand zueinander, wobei der Abschnitt 44 eine rückwärtige Fläche der Rolle 52 und der Abschnitt 46 eine vordere Fläche der rückwärtigen Rolle 54 berührt. Die Abschnitte 44 und 46 bestimmen zusammen mit den Seitenwänden 18 und 22 eine Preßkammer 56, die oben durch die Rollen 52 und 54 begrenzt wird und im vertikalen Querschnitt von der Seite betrachtet keilförmig ausgebildet ist. Der Boden der Preßkammer 56 ist mit einem Einlaß 58 (siehe auch Fig. 2) versehen, der sich zwischen der angetriebenen Rolle 26 und der unteren vorderen Rolle 40 befindet. Erntegut wird mittels einer Fördervorrichtung 60 in den Einlaß 58 gefördert, um dort durch die Bewegung der vorderen und rückwärtigen Abschnitte 44 und 46 der Riemen 42 zu einem nur in Fig. 2 gezeigten Ballen 62 geformt zu werden, wobei diese so angetrieben werden, daß sie sich auf den Einlaß 58 zu bzw. von diesem weg bewegen. Zu Beginn ist hierbei auch eine Starterrolle 64 beteiligt, die drehbar an den Seitenwänden 18 neben der angetriebenen Rolle 26 angebracht ist und in derselben Richtung angetrieben wird wie diese, so daß sie das von der Vorderseite der Riemen 44 nach unten geförderte Erntegut abstreift. Wenn der Ballen 62 geformt ist, dehnt sich die Preßkammer 56 gegen eine Kraft aus, die in den Riemen 42 durch ein Spannsystem aufgebaut wird, das das Paar Spannarme 48 beinhaltet, das zusammen mit Federn und Hydraulikzylindern (nicht gezeigt) zwischen den Seitenwänden 18 und den Spannarmen 48 zum Widerstand gegen eine Aufwärtsbewegung der Spannarme 48 angebracht ist. Wenn der Ballen 62 eine bestimmte Größe erreicht, wird sein Gewicht hauptsächlich von der unteren Rolle 40, aber auch von der angetriebenen Rolle 26 und der Starterrolle 64 getragen.

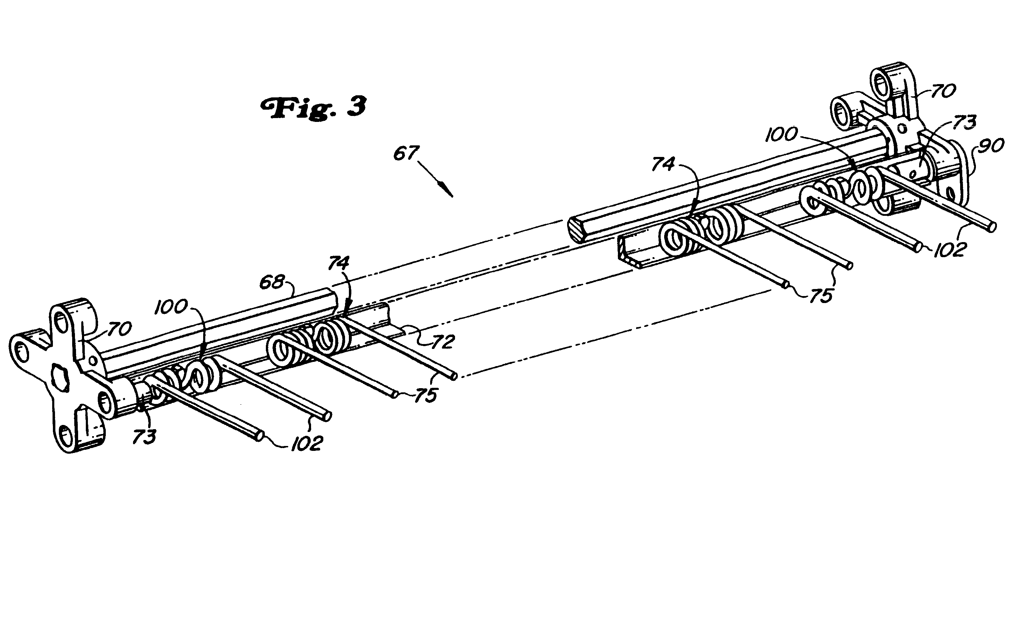

Die Figuren 2 und 3 zeigen, daß die Fördervorrichtung 60 einen Rahmen 66 besitzt, der schwenkbar am Hauptrahmen 12 angebracht ist, um eine Bewegung oder Justierung um eine Achse zu ermöglichen, die in diesem Fall mit der Rotationsachse der unteren Rolle 40 zusammenfällt. Der Rahmen 66 der Fördervorrichtung 60 wird im oberen Bereich seiner Bewegungsoder Einstellmöglichkeiten gezeigt. Die Fördervorrichtung 60 beinhaltet einen Zinkenaufbau 67, der aus einer zentralen Antriebswelle 68 mit hexagonalem Querschnitt besteht, auf der ein Paar Armkreuze 70 an gegenüberliegenden Stellen fest angebracht sind. Die Armkreuze 70 haben jeweils vier gleichwinklig angeordnete Arme und Zinkenstangen 72, die aus Winkeleisen gebildet werden, sich zwischen gesteuerten Armen des Paares Armkreuze 70 erstrecken und daran durch zylindrische Stifte 73 schwenkbar angebracht sind, die lösbar an gegenüberliegenden Seiten jeder Zinkenstange 72 befestigt sind und schwenkbar in Bohrungen in jedem Paar der gesteuerten Arme aufgenommen werden. An jeder Zinkenstange 72 sind Federzinken 74 quer mit Abstand voneinander gesichert, wobei jedes einen gewendelten Innenteil, der an der Zinkenstange 72 befestigt ist, und ein Paar Zinken 75, die sich von gegenüberliegenden Enden des Innenteils erstrecken, besitzt. Jede Gruppe von vier Federzinken 74, die an derselben Stelle auf den vier Zinkenstangen 72 angebracht ist, hat erste und zweite Sätze in gleicher radialer Ebene liegender Zinken 75. Ein U-förmiger Abstreiferzusammenbau 76 ist rückwärtig geöffnet und enthält separate Abstreifer 78 in der Form von Bändern, die sich zwischen jedem Satz koplananer Zinken 75 jeder Gruppe von vier Federzinken 74 befinden, so daß zwischen benachbarten Abstreifern 78 Schlitze gebildet werden, um den freien Durchgang der Zinken 75 zu ermöglichen. Wie von der Seite sichtbar, hat jeder Abstreifer 78 eine vordere halbkreisförmige Nasenpartie, die mit oberen und unteren parallelen Schenkeln verbunden ist, wobei ein rückwärtiges Ende des oberen Schenkels bei 82 an eine obere, flache Querfläche 84 des Rahmens 66 der Fördervorrichtung 60, und ein unterer Schenkel bei 86 an einer unteren, flachen Querfläche 88 des Rahmens 66 befestigt ist. Um eine kontrolliert schwenkende Bewegung der Zinkenstange 72 und folglich die gewünschte Bewegung der Zinken 75 zu erreichen, und da sich die Zinkenstangen 72 mit der Antriebswelle 68 und den Armkreuzen 70 drehen, ist ein Mitnehmerzusammenbau vorgesehen, der Arme 90 beinhaltet, die an den äußeren Enden der Stifte 73 angeschweißt sind, die mit den linken Enden der vier Zinkenstangen 72 verbunden sind. An jeden dieser Arme 90 ist eine Mitnehmerrolle 92 montiert, die in einer endlosen, nach innen offenen, im wesentlichen D-förmigen Spur 94 eines Mitnehmers 96 aufgenommen wird, der an einer linken, aufrechten Seite (nicht gezeigt) des Rahmens 66 der Fördervorrichtung 60 befestigt ist. Wenn die Mitnehmerrollen 92 entlang der Spur 94 fahren, bewirken sie, daß die Zinkenstangen 72 so bewegt werden, daß die äußeren Enden der Zinken 75 der Federzinken 74 einen Pfad verfolgen, der mit 98 bezeichnet wird. Wenn die Federzinken 74 die obere oder 12-Uhr-Stellung ihres Umlaufs erreichen, sind die Zinken 75 gezwungen, vorwärts zu schwenken, so daß ein Hauptteil der Bewegung der Zinken 75 nach unten gerichtet ist und die Zinken 75 unter die Ebene der oberen Schenkel der Abstreifer 78 gezogen werden.

Bis hierher entspricht die Beschreibung der einer konventionellen Presse und Fördervorrichtung. Jedoch ist die Fördervorrichtung 60 der Anmelderin nicht konventionell, da die Federzinken 74 und die Zinken 75 erheblich steifer sind als normale Zinken.

Ein bekannter konventioneller Federzinken besitzt folgende Steifigkeit:
a) Federkomponente pro Zinken = 0,162 Nm (1,44 in-lb) pro Biegegrad; und
b) Biegekraft senkrecht zum Zinken = 40,02 N (9 lb.) bei 41 Grad Biegung.

Es wird angenommen, daß niemand in der Industrie Zinken verwendet, deren Federkomponente 0,225 Nm (2 in-lb) pro Grad überschreitet.

Die von der Anmelderin verwendeten Federzinken 74 besitzen die folgende Steifigkeit:
a) Federkomponente pro Zinken 75 = 0,445 Nm (3,96 in-lb) pro Biegegrad; und
b) Biegekraft senkrecht zum Zinken 75 = 111,14 N (25 lb) bei 41 Grad Biegung.

Infolgedessen sind die Federzinken 74 also mehr als doppelt so steif, wie der steifeste Federzinken, von dem angenommen wird, daß er verwendet wird, und mehr als 2,5mal so steif wie ein konventioneller Zinken.

Bezugnehmend auf Figur 3 wird eine leichte Variation der Fördervorrichtung 60 gezeigt, in der steife Federzinken 74 zusammen mit sehr steifen oder ultrasteifen Federzinken 100 mit Zinken 102 vorgesehen sind. Diese Federzinken 100 sind ca. 10mal steifer als die Federzinken konventioneller Fördervorrichtungen und folglich 4mal steifer als die steifen Federzinken 74 mit ihren Zinken 75. So sind die Zinken 102 unter normalen Einsatzbedingungen im wesentlichen unflexibel. Wenn auch diese Federzinken 100 mit einem gewendelten Innenteil gezeigt werden, wird bemerkt, daß U-förmige Federzinken, die aus Stabmaterial ohne Wicklung hergestellt werden, ebenso zur Verbesserung der Arbeitsweise verwendet werden können.

Wie es dargestellt ist, ist ein Federzinken 100 an jedem Ende einer Zinkenstange 72 befestigt, wobei die Federzinken 74 im Mittenbereich der Zinkenstange 72 angebracht sind. Der Zweck der Federzinken 100 ist es, die Zufuhr an den Enden der Fördervorrichtung 60 positiver oder aggressiver zu machen, da es, wie oben dargelegt, besonders wichtig ist, eine Verzögerung der Gutzufuhr während des Anfangs des Preßvorgangs zu verhindern, da solche Verzögerungen zu Verstopfungen führen. Bei der Verwendung bisheriger Fördervorrichtungen kommen solche Verzögerungen fast immer an oder in der Nähe der Enden der Fördervorrichtung 60 vor, wenn sich zusätzliches Erntegut über die Enden der Fördervorrichtung 60 hinaus erstreckt und ein zusätzliches Gutvolumen verursacht, das in die Preßkammer 56 befördert werden muß. Wenn eine solche aggressive Zufuhr über einen breiteren Bereich der Enden der Fördervorrichtung 60 erwünscht ist, können mehrere ultra-steife Federzinken 100 an jedem Ende benutzt werden. Außerdem führt bei manchen Erntegutbedingungen die Zufuhr durch ein Mischen der Federzinken 100 und Zinken 74 untereinander über den mittleren Bereich der Fördervorrichtung 60 zu einer Verbesserung der Gutzufuhr.

## Patentansprüche

1. Erntemaschine (10) mit einer Fördervorrichtung (60), die Erntegut vom Boden aufnimmt und es zu Gutbearbeitungselementen weiterleitet und auf einem rotierenden Zinkenaufbau (67) getragene oberschlächtig fördernde Federzinken (74, 100) aufweist, **dadurch gekennzeichnet, daß** die Federzinken (74, 100) in den seitlichen Endbereichen der Fördervorrichtung (60) eine Biegesteifigkeit derart aufweisen, daß zum Erreichen eines Biegewegs von 41 Grad an der Spitze eines Zinkens (75) eine Kraft von wenigstens 84 N (19 lbf), vorzugsweise 336 N (76 lbf), erforderlich ist, während in dem dazwischen gelegenen Bereich Federzinken geringerer Biegesteifigkeit vorgesehen sind.

2. Erntemaschine nach Anspruch 1, **gekennzeichnet durch** Federzinken (74, 100) mit zwei an einem gewendelten Zwischenteil anschließenden Zinken (75, 102).

3. Erntemaschine nach Anspruch 1, **gekennzeichnet durch** Federzinken (74, 100) mit zwei an einem geraden Zwischenteil anschließenden Zinken (75, 102).

4. Als Rundballenpresse ausgebildete Erntemaschine (10) nach einem oder mehreren der vorherigen Ansprüche, wobei sich die Fördervorrichtung (60) unterhalb eines Einlasses (58) einer Preßkammer (56) befindet.

## Claims

1. A harvesting machine (10) with a conveyor device (60) which picks up harvested crop from the ground and passes it on to crop processing elements and comprises spring tines (74, 100) carried on a rotating tine structure (67), effecting overshot feeding, **characterized in that** the spring tines (74, 100) in the side end regions of the conveyor device (60) have such a bending stiffness that a force of at least 84 N (19 lbf), preferably 336 N (76 lbf) is necessary to achieve a bending displacement of 41 degrees at the tip of a tine (75), while spring tines of smaller bending stiffness are provided in the region lying in between.

2. A harvesting machine according to claim 1, **characterized by** spring tines (74, 100) with two tines (75, 102) adjoining on a coiled intermediate part.

3. A harvesting machine according to claim 1, **characterized by** spring tines (74, 100) with two tines (75, 102) adjoining on a straight intermediate part.

4. A harvesting machine (10) in the form of a round baler according to one or more of the preceding claims, wherein the conveyor device (60) is located below an inlet (58) of a baling chamber (56).

## Revendications

1. Moissonneuse (10) du type comportant un dispositif de convoyage (60) qui ramasse la matière récoltée au sol et la transfère à des éléments de traitement de la matière et qui comporte des dents à ressorts (74, 100) présentant une face supérieure d'entraînement et portées par une structure rotative à dents (67), **caractérisée en ce que** les dents à ressorts (74, 100) dans les régions latérales d'extrémité du dispositif de convoyage (60) présentent une résistance à la flexion telle que, pour l'obtention d'un débattement de flexion de 41° au niveau de la pointe d'une dent (75), il est nécessaire d'appliquer une force d'au moins 84 N (19 livres.pied), de préférence de 336 N (76 livres.pied), tandis que dans la région intermédiaire sont prévues des dents à ressorts à plus faible résistance à la flexion.

2. Moissonneuse selon la revendication 1, **caractérisée par** des dents à ressorts (74, 100) qui se raccordent à deux dents (75, 102) montées sur une partie intermédiaire hélicoïdale.

3. Moissonneuse selon la revendication 1, **caractérisée par** des dents à ressorts (74, 100) qui se raccordent à deux dents (75, 102) montées sur une partie intermédiaire rectiligne.

4. Moissonneuse (10) formant presse à balles cylindriques selon l'une ou plusieurs des revendications précédentes, dans laquelle le dispositif de convoyage (60) se trouve au-dessous de l'entrée (58) d'une chambre de pressage (56).
